Europäisches Patentamt

European Patent Office

Office européen des brevets

(19)

(11) Publication number: **0 094 429**
**B1**

(12) **EUROPEAN PATENT SPECIFICATION**

(45) Date of publication of patent specification: **27.01.88**

(51) Int. Cl.⁴: **G 01 L 7/08, G 01 L 9/12**

(21) Application number: **83900233.4**

(22) Date of filing: **24.11.82**

(86) International application number:
**PCT/US82/01656**

(87) International publication number:
**WO 83/02004 09.06.83 Gazette 83/14**

(54) **APPARATUS FOR CONVEYING FLUID PRESSURES TO A DIFFERENTIAL PRESSURE TRANSDUCER.**

(30) Priority: **27.11.81 US 325342**

(43) Date of publication of application:
**23.11.83 Bulletin 83/47**

(45) Publication of the grant of the patent:
**27.01.88 Bulletin 88/04**

(84) Designated Contracting States:
**AT CH DE FR LI NL SE**

(56) References cited:
**GB-A-1 572 814**
**US-A- 188 451**
**US-A-1 272 344**
**US-A-3 262 317**
**US-A-3 509 767**
**US-A-3 999 435**

**AGCO Manifolds, by Anderson, Greenwood &**
**Co. Catalog 3000, Rev. Oct.1980, page 2**

(73) Proprietor: **ROSEMOUNT INC.**
**12001 West 78th Street**
**Eden Prairie, MN 55344 (US)**

(72) Inventor: **FRICK, Roger L.**
**17951 Evenston Road**
**Eden Prairie, MN 55344 (US)**

(74) Representative: **Mayes, Stuart David et al**
**BOULT, WADE & TENNANT 27 Furnival Street**
**London, EC4A 1PQ (GB)**

Courier Press, Leamington Spa, England.

## Description

The present invention relates to apparatus for conveying fluid pressures to a differential pressure transducer.

Known differential pressure transmitters consist of three functional sub units: input members, a transducer, and an electrical input-output unit. To sense differential pressure, the transmitter compares two fluid pressures. The fluid pressures are separately conveyed to the transducer by two input members mounted on opposite sides of the transducer. Each input member is connected to a conduit containing fluid under pressure. Each input member is typically separately cast or machined from stainless steel. The transducer has two separate oppositely facing portions, each of which is affected by one of the two fluid pressures, and in response generates a signal representative of the differential in such pressures. This signal is set to the input/output unit which functions to power the transducer, to receive the differential pressure input signal from the transducer to transform the input signal into an industry standardized signal representative of differential pressure and to output that standardized signal for use external to the differential pressure transmitter.

A three valve manifold has frequently been used with a differential pressure transmitter. It has typically been interposed between the conduit and the input members of the differential pressure transmitter by bolting it to each of the input members, utilizing O-rings to effect sealing therebetween. Alternatively, the three valve manifold has been installed by interposing short additional sections of piping between the manifold and each of the input members.

The three valve manifold is typically used to perform three functions: (1) to selectively admit fluid pressure from both input members to affect the transducer, (2) to exclude fluid pressure from one input member while admitting fluid pressure from the other input member to affect both portions of the transducer, and (3) to isolate the transducer completely from the fluid pressure from both input members. A typical prior art three valve manifold is detailed in the product literature of Anderson, Greenwood & Co. of Houston, Texas, entitled AGCO Manifolds, Catalog 3000, Revised Oct. 1980.

It is desirable to provide the above mentioned fluid pressure conveying functions at reduced cost.

Also important is the aspect of increased safety. It is recognized that the input members convey whether process fluid is flowing in the conduit. This fluid may be at high pressure and/or temperature. Likewise, it may be caustic, acidic, flammable or noxious. As such, it constitutes a distinct hazard. In order to minimize this hazard, it is desirable to minimise the number of fluid connections associated with a differential pressure transmitter, as such connections are potential sources of dangerous leakage.

According to this invention there is provided apparatus for conveying fluid pressures to a differential pressure transducer, comprising a manifold member having first and second passageways extending therethrough, and first and second flexible isolation diaphragms closing said passageways in said manifold member such that in use fluid pressures applied to said passageways in said manifold member act on said diaphragms and thereby cause deflection thereof, characterised by a single input member for connection to the transducer and having therein first and second openings open to a common face of said input member, said diaphragms being sealed to said common face of said input member over said openings therein, and in that said passageways in said manifold member open to a common face of said manifold member, said manifold member being adapted to be secured to said input member with their said common faces sealingly engaged and said openings in said input member aligned with said passageways in said manifold member.

This invention will now be described by way of example with reference to the drawings, in which:—

Figure 1 is an exploded view of a preferred embodiment of apparatus according to the invention connecting a conduit to a differential pressure transducer of a differential pressure transmitter;

Figure 2 is a sectional view taken along line 2—2 of Figure 1;

Figure 3 is an exploded view of a second preferred embodiment of apparatus according to the invention with integral three valve manifold;

Figure 4 is a sectional view taken along line 4—4 of Figure 3;

Figure 5 is an exploded view of another preferred embodiment of apparatus according to the invention;

Figure 6 is an exploded view of another preferred embodiment of apparatus according to the invention with an integral three valve manifold; and

Figure 7 is a sectional view taken along line 7—7 in Figure 6.

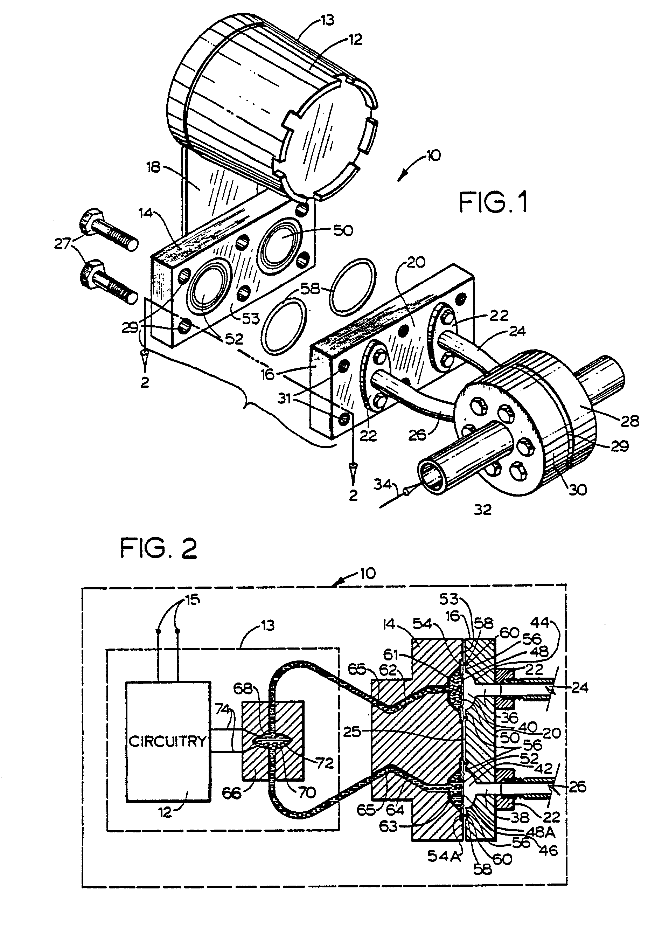

Figure 1 shows a differential pressure transmitter 10 which has three major sub-units; input/output unit 12, input member 14, and manifold member 16.

Physically, input/output unit 12, shown schematically in Figure 2, is contained in input/output housing 13, which is connected to input member 14 by neck 18. Manifold member 16 is connected at a first face 20 to first and second piping legs 24 and 26 respective by means of flange adaptor unions 22. Manifold member 16 is additionally connected at second face 25, shown in Figure 2, to input member 14, the connection being effected by conventional means, as for example in this embodiment by bolts 27 inserted through smooth bores 29 in input member 14 and threaded into threaded bores 31 in manifold member 16. Preferably manifold member 16 is formed of high density material.

Funtionally it is the purpose of differential pressure transmitter 10 to output an electrical signal, preferably in industry standarized format, that is representative of the differential of the two fluid pressures. When such differential pressure is the differential of pressures taken upstream and downstream of an orifice in a conduit, this differential may be correlated, through known relationships, to rate of flow in the conduit. To achieve this function, input/output unit 12 supplies power to the differential pressure transducer and receives an input signal representative of differential pressure from the transducer. Input/output unit 12 preferably is comprised of circuitry such as in US—A—3854039 but other known circuitry will also function satisfactorily. The transducer functions to be affected by the fluid pressure and to generate the input signal in response thereto. For packaging convenience, selected components performing various functions may be located in input/output housing 13. In addition to being a supporting structure, neck 18 preferably has a conduit containing the means of communication between input/output unit 12 and input member 14.

Input/output unit 12 operates on the input signal to generate the standardized output signal representative of differential pressure of transmission via leads 15, shown in Figure 2, and for use external to differential pressure transmitter 10. It is understood that input/output unit 12 need not be directly affixed to input member 14. It may be located remotely from but communicatively coupled to the other two sub-units of differential pressure transmitter 10, as for example in a plant control room.

As previously described, manifold member 16 is connected to first and second pipe legs 24 and 26 which may be any means supplying fluid under pressure to manifold member 16. In the embodiment shown in Figure 1, first and second piping legs 24 and 26 are small diameter inlet pipes, typically 1.27 cms (one half inch) diameter, each of which is connected to manifold member 16 by a flange adapter union 22. First piping leg 24 is additionally connected to orifice flange 28 while second piping leg 26 is additionally connected to orifice flange 30. Orifice flanges 28 and 30 support an orifice plate (not shown) in recess 29 between them. Orifice flanges 28 and 30 are shown affixed to conduit 32 and, by means of conventional passageways therein, fluidly connect first and second piping legs 24 and 26 to conduit 32. Flow in conduit 32 is indicated by arrow 34. The orifice plate restricts the flow in conduit 32 in a known manner, thereby generating a differential pressure, which is a function of a rate of flow. It is understood that differential pressure transmitter 10 works equally well with flow in a direction opposite to that indicated by arrow 34. first piping leg 24 intersects and is connected to conduit 32 downstream of the orifice plate and is connected at first face 20 to a first end of first fluid pressure passageway 36 shown in Figure 2. Second pipe leg 26 intersects and is connected to conduit 32 upstream of the orifice plate and is connected at first face 20 to a first end of second fluid pressure passageway 38, also shown in Figure 2.

As shown in Figure 2, first and second fluid pressure passageways 36 and 38 in manifold member 16 function to separately fluidly couple first and second piping legs 24 and 26 respectively to input member 14. Accordingly, first and second fluid pressure passageways 36 and 38 open at a second end at second face 25 of manifold member 16 and are there fluidly coupled to first and second fluid chambers 40 and 42 respectively. First and second fluid chambers 40 and 42 are separately formed by wall 44 and wall 46 respectively, formed in second face 25 of manifold member 16, in cooperation with fluid facing sides of a first and second pressure sensing and transmitting means mounted in input member 14 when manifold member 16 and input member 14 are mated together in their normal position. The first and second pressure sensing and transmitting means comprise first and second flexible isolation diaphragms 50 and 52 disposed on face 53 of input member 14 and having outwardly facing sides 48 and 48A respectively.

The first and second pressure sensing transmitting means are so oriented as to facilitate fluidly sealing first and second fluid chambers 40 and 42 respectively when mated to manifold member 16.

As shown in Figure 2, first and second isolation diaphragms 50 and 52 have outwardly facing sides 48 and 48A respectively, the peripheries of which are defined by rims 54 and 54A are co-planar, although they need not be to by fully functional. First and second isolation diaphragms 50 and 52 are joined at their rims 54 and 54A to input member 14 as by welding. When manifold member 16 and input member 14 are mated together, rims 54 and 54A additionally abut opposing sealing portions 56 of second face 25 of input member 16 respectively. Sealing portions 56 are formed in second face 25 of manifold member 16 annular to the second end of both fluid passageways 36 and 38. Preferably the planes defined by the sealing portions 56 are substantially co-planar, though they need not be co-planar to be fully functional. When manifold member 16 and input member 14 are mated together, the planes defined by rims 54 and 54A are substantially parallel to the plane formed by the opposing sealing portion 56 of second face 25.

First and second isolation diaphragms 50 and 52 are preferably chosen to be substantially unaffected by or, at least, resistent to the corrosive properties of the fluid. Structurally, they are selected to be able to withstand the pressure of the fluid, yet are flexible enough to deflect responsive to the fluid pressure acting thereon.

Sealing means 58, also shown in Figure 2, are interposed between input member 14 and manifold member 16 annular to first and second isolation diaphragms 50 and 52 to assist in effecting a substantially fluid tight seal for first and second fluid chambers 40 and 42 when input member 14 and manifold member 16 are mated together. Sealing means 58 preferably are compressible O-rings compressed between manifold member 16 and input member 14 in grooves 60 formed in sealing portion 56 of second face 25. Sealing means 58 are formed from materials preferably chosen to resist damage from the corrosive properties of the fluid.

First and second fluid cavities 61 and 63 are formed in input member 14 in cooperation with first and second isolation diaphragms 50 to 52 respectively and are open to first and second fluid passageways 62 and 64 respectively. First and second fluid passageways 62 and 64 communicatively couple first and second isolation diaphragms 50 and 52 to sensor element 66. Both first and second fluid cavities 61 and 63 and first and second fluid passageways 62 and 64 are filled with a substantially incompressible fluid such as silicone oil 65.

It is the purpose of differential pressure transmitter 10 to measure flow in conduit 32 as shown in Figure 1. This is typically accomplished by restricting the flow with the orifice plate as previously described. With the flow as indicated by arrow 34 in conduit 32, flow past the orifice plate results in an area of high pressure immediately upstream of the orifice plate and an area of low pressure immediately downstream of the orifice plate in a known manner. Accordingly, in the preferred embodiment shown in Figures 1 and 2, second piping leg 26 contains fluid at the higher pressure while the fluid in first piping leg 24 is at the lower pressure. Lower fluid pressure from piping leg 24 is conveyed through first fluid pressure passageway 36 in manifold member 16 shown in Figure 2 to first fluid chamber 40 where it acts upon outwardly facing side 48 of first isolation diaphragm 50. In a similar fashion, higher fluid pressure from piping leg 26 is conveyed through second fluid pressure passageway 38 shown in Figure 2 to second fluid chamber 42 where it acts upon outwardly facing side 48A of second isolation diaphragm 52.

Fluid pressure acting on first and second isolation diaphragms 50 and 52 deflects such isolation diaphragms. These pressure inputs are transmitted to silicone oil 65, which functions as a means for transmitting the pressure to first and second portions 68 and 70 of sensor element 66. Through the medium of silicone oil 65, sensor element 66 is responsive to the differential between the pressures acting on first and second isolation diaphragms 50 and 52. Sensor element 66 resolves the high pressure and the low pressure and generates an input signal representative of the difference therebetween, i.e. differential pressure. The input signal is transmitted via leads 74 to input/output unit 12.

In the preferred embodiment shown in Figure 2, sensor element 66 is a capacitive device, formed in a known manner. In such device, measuring diaphragm 72 divides sensor element 66 into first and second portions 68 and 70. First portion 68 together with first and fluid passageway 62 and first fluid cavity 61 comprise a first separate and sealed, fluid-filled volume. Similarly, second portion 70, second fluid passageway 64 and second fluid cavity 63 comprise a second separate and sealed, fluid-filled volume. Sensor element 66 is externally excited by input/output unit 12 via electrical leads 74. Responsive to differential pressure, measuring diaphragm 72 is deflected as a known function of the differential pressure, varying the capacitance of sensor module 66. The effect of the varied capacitance is to alter the external exciting signal. This alteration comprises the input signal and is sensed via electrical leads 74 at input/output unit 12.

The circuitry of input/output unit 12 operates on the input signal and presents a standardized output signal at electrical leads 15 representative of such capacitance which is in effect representative of differential pressure. At input/output unit 12, the input signal from sensor element 66 is preferably operated on in accordance with US—A—3854039.

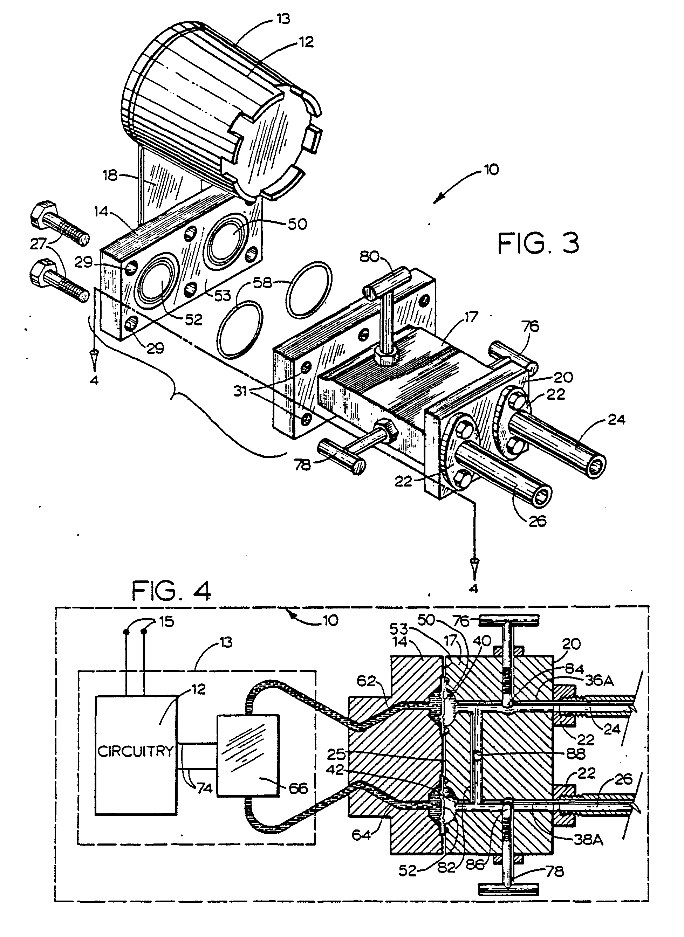

The reference numbering in Figure 3 corresponds to that in Figure 1. It is understood that first and second piping legs 24 and 26 are connected to a conduit substantially as shown in Figure 1. Figure 3 shows a manifold member constituted by a three valve manifold 17, including first, second, and third valve handles 76, 78 and 80 respectively that comprise a portion of the three valve manifold. Manifold 17 is constructed of high density material and preferably formed in substantially an I-shape when viewed from the side as shown. Manifold 17 has a first face 20 at which first and second piping legs 24 and 26 are connected by means of flange adaptor unions 22 and a second face 25, obscured in Figure 3, but shown in Figure 4, adapted to be connected to input member 14.

The reference numbering in Figure 4 is consistent with that in the previous Figures. It is understood that input member 14, as shown in Figure 4, has the same features as input member 14 shown in Figure 2 including a sensor element 66 and associated signal transmission means. In addition to the feature detailed in Figure 3, Figure 4 includes portions of the integral three valve manifold including specifically crossover passageway 82 and first, second and third valves 84, 86 and 88 respectively. As shown, first, second and third valves 84, 86 and 88 are threaded into manifold 17 and are opened and closed by turning handles 76, 78 and 80 respectively. It is understood that other conventional valve structures are suitable to provide the desired function. First piping leg 24, is connected at first face 20 by means of flange adaptor union 22 to first fluid passageway 36A in manifold 17. Second piping leg 26 is connected at first face 20 by means of flange adaptor union 22 to second fluid passageway 38A. First and second fluid passageways 36A and 38A and cross-over passageway 82 comprise an H-shaped series of passageways in manifold 17. First and second fluid passageways 36A and 38A separately open at second face 25 and fluidly couple first and second piping legs 24 and 26 respectively to input member 14. Crossover passageways 82 intersects and fluidly couples first and second fluid passageways 36A and 38A. First valve 84 is mounted in manifold 17 and intersects first fluid pressure passageway 36A between first face 20 and the intersection of cross-over passageway 82. First valve 84 is capable of selectively substantially isolating input member 14 from the fluid pressure in first piping 24 and of selectively admitting such pressure. Second valve 86 is similarly mounted in manifold 17 intersecting second fluid passageway 38A between first face 20 and the intersection with cross-over passageway 82. Second valve 86 is capable of selectively substantially isolating input member 14 from the fluid pressure in second piping leg 26 and of selectively admitting such pressure. Third valve 88 is mounted in manifold 17 and intersects cross-over passageway 82. It is capable of selectively enabling fluid pressure exchange between first and second fluid passageways 36A and 38A and fluidly isolating such passageways from each other.

A major objective of the three valve manifold is to permit calibration of the "zero" setting of transmitter 10 without removing transmitter 10 from service and without having to interrupt the flow in conduit 32. Under normal operating conditions, when differential pressure transmitter 10 is measuring the differential pressure, both first and second valves 84 and 86 are open and third valve 88 is closed. In this configuration, first and second fluid passageways 36A and 38A are fluidly isolated from each other. "Zero" calibration is accomplished by closing either first or second valve 84 or 86 and opening third valve 88. "Zero" calibration may be performed, as for example, when second valve 86 is closed, thereby isolating input member 14 from the fluid pressure in second piping leg 26. Fluid pressure from first piping leg 24 is coveyed via fluid passageway 36A past open first valve 84 to fluid chamber 40. Third valve 88 is then opened and the pressure of the fluid in fluid passageway 36A is transmitted via cross-over passageway 82 to the fluid in second fluid passageway 38A and thence to second fluid chamber 42, thereby equalizing the fluid pressure in both first and second fluid chambers 40 and 42 at the pressure of the fluid in first piping leg 24. The transducer is then sensing the same pressure at both first and second isolation diaphragms 50 and 52 or, in other words, is sensing zero differential pressure. In this condition, the standardized output signal from input/output unit 12 may be calibrated to indicate zero differential pressure, equating to a known or zero flow in conduit 32.

Subsequent to performance of the calibration procedure, third valve 88 is again closed, thereby fluidly isolating first and second fluid pressure passageways 36A and 38A from each other. Second valve 86 is then opened, again pressurizing second fluid pressure passageway 38A and second fluid chamber 42 at the pressure of the fluid in second piping leg 26 thereby returning differential pressure transmitter 10 to the previously described opening condition of measuring flow in conduit 32. It should be noted that, if desired, one of first and second piping legs 24 and 26 may be at atmospheric pressure or some other reference pressure and the other leg at a pressure to be measured relative to the reference. The "zeroing" capability of input/output unit 12 is also available for this condition by following the above described procedures.

A further objective of a three valve manifold is to permit removal of differential pressure transmitter 10 for routine maintenance or replacement as may be required, without interruption of flow in conduit 32. This is accomplished by first closing both first and second valves 84 and 86, thereby fluidly isolating the transducer from conduit 32, and then removing bolts 27, shown in Figure 3, from manifold 17. Input member 14 and input/output unit housing 13 may then be separated from manifold 17. Reinstallation follows the reverse of the described procedure insuring that seal means 58 are renewed if such renewal is required to again effect fluid tight seals when input member 14 is mated to manifold 17.

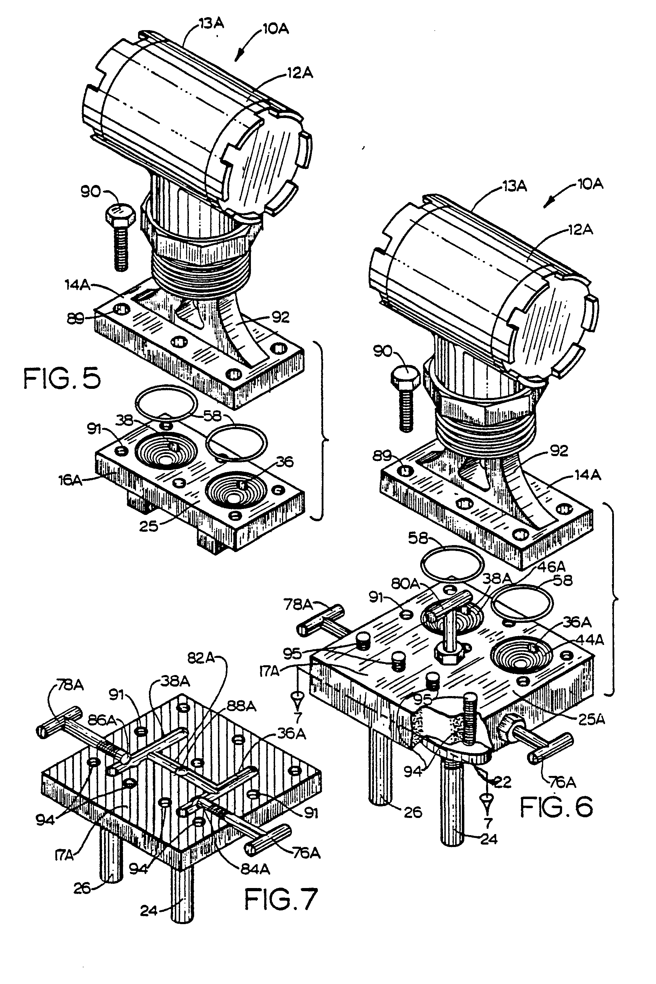

Figures 5 and 6 show further preferred embodiments of the instant invention. The reference numbering is consistent with that of previous figures. Figure 5 shows manifold member 16A, a sub-unit of differential pressure transmitter 10A. Input member 14A is affixed in a conventional manner to manifold member 16A by bolts 90 inserted through smooth bore 89 and threaded into threaded bore 91. Communication between input member 14A and input/output unit 12A is via conduits internal to strut 92. In a preferred embodiment, the underside of input member 14A not shown in Figures 5 and 6, is substantially identical to face 53 of input member 14, including the disposition of first and second isolation diaphragms 50 and 52 therein. Sealing means 58 are disposed between manifold member 16A and input member 14A. Fluid passageways functionally similar to first and second fluid passageways as shown in 62 and 64 in Figure 2 are disposed in strut 92 and communicatively connect isolation diaphragms 50 and 52 to a sensor element 66, as shown in Figure 2, which sensor element is disposed in input/output unit housing 13A remote from the isolation diaphragms.

Figure 6 shows another preferred embodiment of differential pressure transmitter 10A with manifold 17A. In this embodiment, differential pressure transmitter 10A is as described for Figure 5 and the reference numbering here is consistent with that of Figure 5. Manifold 17A is a rectangular prism in shape. First and second piping legs 24 and 26 are each connected to flange adaptor unions 22 which in turn are conventionally affixed to the underside of manifold 17A, as for example by bolts 95 threaded into threaded bores 94. In this embodiment, the underside of manifold 17A constitutes the first face of manifold 17A corresponding to the previously described first face 20 and upper side constitutes second face 25A corresponding to second face 25 as shown in Figures 3 and 4. The fluid passageways defined in manifold 17A are substantially in the H-shaped pattern as shown in Figure 4.

As is shown in section in Figure 7, the first fluid passageway 36A extends from the intersection of first piping leg 24 with manifold 17A to exit at wall 44A of second face 25A, shown in Figure 6, where it is aligned with first isolation diaphragm 50 mounted in the underside of input member 14A. First valve 84A attached to first valve handle 76A intersects the side of the first fluid passageway 36A. Similarly, the second fluid passageway 38A exists at wall 46A, shown in Figure 6, and couples second piping leg 26 to second isolation diaphragm 52. Second valve 86A attached to second valve handle 78A, intersects the side of the second fluid passageway. Cross-over passageway 82A connects the first and second fluid passageways 36A and 38A and is intersected by the third valve 88A, attached to third valve handle 80A.

In the preferred embodiments shown, input members 14 and 14A preferably are functionally constructed in accordance with US—A—3618390, but many other known transducers may otherwise be used.

## Claims

1. Apparatus for conveying fluid pressures to a differential pressure transducer (12), comprising a manifold member (16) having first and second passageways (36, 38) extending therethrough, and first and second flexible isolation diaphragms (50, 52) closing said passageways (36, 38) in said manifold member (16) such that in use fluid pressures applied to said passageways (36, 38) in said manifold member (16) act on said diaphragms (50, 52) and thereby cause deflection thereof, characterised by a single input member (14) for connection to the transducer (12) and having therein first and second openings (62, 64) open to a common face (53) of said input member (14), said diaphragms (50, 52) being sealed to said common face (53) of said input member (14) over said openings (62, 64) therein, and in that said passageways (36, 38) in said manifold member (16) open to a common face (25) of said manifold member (16), said manifold member (16) being adapted to be secured to said input member (14) with their said common faces (25, 53) sealingly engaged and said openings (62, 64) in said input member (14) aligned with said passageways (36, 38) in said manifold member (16).

2. Apparatus as claimed in Claim 1, characterised in that said common face (25) of said manifold member (16) is formed with grooves (60) extending about the open ends of the openings therein, the grooves (60) receiving sealing members (58) which, when said input member (14) is secured to said manifold member (16), engage said diaphragms (50, 52) carried by said input member (14).

3. Apparatus as claimed in Claim 1 or Claim 2, characterised in that said manifold member (16) provides communication (82) between said passageways (36, 38) therein, and has valves (76, 78) for controlling the fluid pressure in said passageways (36, 38).

4. Apparatus as claimed in any preceding claim, characterised in that said openings in said input member (14) are passageways (67, 64) which extend therethrough, said deflection of said diaphragms (59, 52) causing corresponding pressure changes in fluid in said passageways (62, 64) in said input member (14), which pressure changes are in use conveyed to said differential pressure transducer (12).

## Patentansprüche

1. Gerät zur Zuführung von Fluiddrücken zu einem Differenzdruckwandler (12), mit einem Verteiler (16) mit ersten und zweiten Kanälen (36, 38), die sich durch diesen hindurch erstrecken, und mit einer ersten und einer zweiten biegsamen Trennmembran (50, 52), die die Kanäle (36, 38) in dem Verteiler (16) derart abschließt, daß im Betrieb die Fluiddrücke in den Kanälen (36, 38) des Verteilers (16, 18) auf die Membranen (50, 52) wirken und sie auslenken, gekennzeichnet durch ein einziges Eingangsteil (14) für den Anschluß des Wandlers (12) mit ersten und zweiten Öffnungen (62, 64), die zu einer gemeinsamen Fläche (53) des Eingangsteils (14) offen sind, wobei die Membranen (50, 52) an der gemeinsamen Fläche (53) des Eingangsteils (14) über den Öffnungen (62, 64) in diesem abgedichtet sind, sowie dadurch, daß die Kanäle (36, 38) in dem Verteiler (16) gegenüber einer Fläche (25) des Verteilers (16) offen sind, und daß der Verteiler (16) so ausgelegt ist, daß er an dem Eingangsteil (14) unter abdichtender Anlage der gemeinsamen Flächen (25, 53) befestigt ist und die Öffnungen (62, 64) in dem Eingangsteil (14) mit den Kanälen (36, 38) in dem Verteiler (16) fluchten.

2. Gerät nach Anspruch 1, dadurch gekennzeichnet, daß die gemeinsame Fläche (25) des Verteilers (16) Rillen (60) aufweist, die sich um die offenen Enden der Öffnungen in dieser erstrecken, und daß die Rillen (60) Dichtungsteile (58) aufnehmen, die, wenn das Eingangsteil (14) an dem Verteiler (16) befestigt ist, an dem Membranen (50, 52) des Eingangsteils (14) anliegen.

3. Gerät nach Anspruch 1 oder 2, dadurch gekennzeichnet, daß der Verteiler (16) eine Verbindung (82) zwischen den Kanälen (36, 38) in diesem bildet und Ventile (76, 78) für das Steuern des Fluiddrucks in den Kanälen (36, 38) aufweist.

4. Gerät nach einem der vorhergehenden Ansprüche, dadurch gekennzeichnet, daß die Öffnungen in dem Eingangsteil (14) Durchtrittsöffnungen (62, 64) sind, die sich durch dieses hindurch erstrecken, daß die Auslenkung der Membranen (50, 52) entsprechende Druckänderungen in dem Fluid in den Durchtrittsöffnungen (62, 64) in dem Eingangsteil (14) bewirt, die im Betrieb dem Differenzdruckwandler (12) zugeführt werden.

## Revendications

1. Appareil permettant d'acheminer des pressions de fluide vers un transducteur de pression différentielle (12), comprenant un organe distributeur (16) à travers lequel s'étendent un premier et un second passages (36, 38), ainsi qu'un premier et un second diaphragmes flexibles d'isolement (50, 52) qui ferment ces passages (36, 38) formés dans l'organe distributeur (16), de telle manière qu'en service, les pressions de fluide appliquées aux passages (36, 38) formés dans l'organe distributeur (16) agissent sur les diaphragmes (50, 52) et produisent ainsi une déformation de ceux-ci, caractérisé par un unique organe d'entrée (14) destiné à être raccordé au transducteur (12) et comportant une première et une seconde ouvertures (62, 64) s'ouvrant sur une face commune (53) de cet organe d'entrée (14), lesdits diaphragmes (50, 52) étant scellés dans cette face commune (53) de l'organe d'entrée (14) sur lesdites ouvertures (62, 64) formées dans celui-ci, et en ce que les passages (36, 38) formés dans l'organe distributeur (16) s'ouvrent sur une face commune (25) de cet organe distributeur (16), cet organe distributeur (16) étant agencé de manière à être fixé à l'organe d'entrée (14) de telle sorte que leurs faces communes (25, 53) soient en contact hermétique et que lesdites ouvertures (62, 64) dans l'organe d'entrée (14) soient dans l'alignement des passages (36, 38) dans l'organe distributeur (16).

2. Appareil selon la revendication 1, caractérisé en ce qu'il est formée, dans ladite face commune (25) de l'organe distributeur (16), des gorges (60) qui s'étendent autour des extrémités ouvertes des ouvertures formées dans cette face, les gorges (60) recevant des éléments d'étanchéité (58) qui, lorsque l'organe d'entrée (14) est fixé à l'organe distributeur (16), sont en prise avec lesdits diaphragmes (50, 52) portés par l'organe d'entrée (14).

3. Appareil selon la revendication 1 ou 2, caractérisé en ce qu'il est prévu, dans l'organe distributeur (16), une communication (82) entre les passages (36, 38) qui y sont formés, des soupapes (76, 78) étant prévues pour commander la pression de fluide dans les passages (36, 38).

4. Appareil selon l'une quelconque des revendications 1 à 3, caractérisé en ce que lesdites ouvertures dans l'organe d'entrée (14) sont des passages (62, 64) qui s'étendent à travers lui, la déformation des diaphragmes (59, 52) produisant des changements de pression correspondants dans le fluide contenu dans ces passages (62, 64) formés dans l'organe d'entrée (14), changements de pression qui, en service, sont transmis au transducteur de pression différentielle (12).

FIG.1

FIG. 2

CIRCUITRY

FIG. 3

FIG. 4

CIRCUITRY

FIG.5

FIG.6

FIG.7